# FASCICULE DE BREVET EUROPEEN

(11) **EP 3 729 156 B1**
(45) Date de publication et mention de la délivrance du brevet: **10.05.2023**
(21) Numéro de dépôt: 18845437.5
(22) Date de dépôt: 19.12.2018
(51) Int. Cl.: G02B 6/44

(54) **CABLE OPTIQUE A ELEMENTS DE DECHIREMENTS**
OPTISCHES KABEL MIT RIPCORDS
OPTICAL CABLE COMPRISING RIPCORDS

(30) Priorité: 21.12.2017 FR 1762772
(43) Date de publication de la demande: 28.10.2020
(73) Titulaire: ACOME, 75014 Paris (FR)
(72) Inventeur: ROSSIER, Philippe, 50220 Le Mesnil-Ozenne (FR); CHALLIER, Jean-François, 50140 Le Neufbourg (FR); DEBON, Olivier, 50870 Tirepied (FR); RAULT, Sébastien, 35300 Fougeres (FR)
(74) Mandataire: Regimbeau
(86) Numéro de dépôt international: PCT/FR2018/053400
(87) Numéro de publication internationale: WO 2019/122708

(56) Documents cités:
- EP-A2- 0 996 016
- FR-A1- 3 044 776
- US-A1- 2003 059 181
- US-A1- 2006 140 557
- US-B1- 8 913 862

## Description

### DOMAINE DE L'INVENTION

La présente invention concerne un câble optique comprenant un élément optique, et un procédé d'ouverture d'un tel câble optique.

### ETAT DE LA TECHNIQUE

Un câble optique pour réseau d'accès FTTH (« Fiber To The Home » en anglais) comprend conventionnellement un élément optique et une gaine entourant l'élément optique.

L'élément optique est destiné à être raccordé à un foyer d'abonné. Avant d'opérer un tel raccordement, il convient d'ouvrir la gaine du câble pour en extraire l'élément optique.

Le document EP 2 265 984 décrit un câble optique comprenant un renfort présentant une section transversale en forme de croissant, une pluralité d'éléments optiques et une gaine. Le renfort définit une gorge accessible par une ouverture longitudinale, et dans laquelle les éléments optiques sont reçus. La gorge est recouverte par une bande, de sorte à obturer l'ouverture longitudinale. La gaine entoure le renfort et la bande.

Le document EP2265984 décrit par ailleurs un procédé d'ouverture en plein câble de ce câble qui présente toutefois comme inconvénient de requérir un certain nombre d'étapes et de manipulations avant que l'utilisateur puisse avoir accès à un des éléments optiques qu'il renferme.

Le document EP0996016 décrit en outre un câble optique comprenant un coeur extrudé, une gaine, des éléments optiques, et des éléments de déchirement adaptés pour déchirer la gaine lorsque les éléments de déchirement sont tirés vers l'extérieur du câble optique. Les éléments de déchirements et les éléments optiques sont logés dans des cavités distinctes formées dans le coeur extrudé.

Toutefois, ces cavités multiples rendent complexe la fabrication du coeur extrudé, et plus généralement du câble optique. Par ailleurs, la présence de ces cavités multiples rend relativement délicat l'assemblage des différentes pièces qui forment le câble, puisqu'il faut prendre soin que chaque élément optique ou de déchirement soit logé dans une cavité correcte.

### EXPOSE DE L'INVENTION

Un but de l'invention est de faciliter l'ouverture d'un câble renfermant un élément optique, par rapport à l'art antérieur sans pour autant complexifier la fabrication d'un tel câble.

Il est dès lors proposé un câble optique et un procédé d'ouverture d'un câble optique selon les revendications indépendantes 1 et 10 respectivement. Différents modes de réalisation sont présentés dans les revendications dépendantes.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 est une vue en coupe transversale d'un câble optique selon un premier mode de réalisation de l'invention,
- La figure 2 est une vue en coupe transversale d'un câble optique selon un second mode de réalisation de l'invention,
- La figure 3 est une vue en perspective du câble optique selon le premier mode de réalisation, dans un état ouvert.

Sur l'ensemble des figures, les éléments similaires portent des références identiques.

### DESCRIPTION DETAILLEE DE L'INVENTION

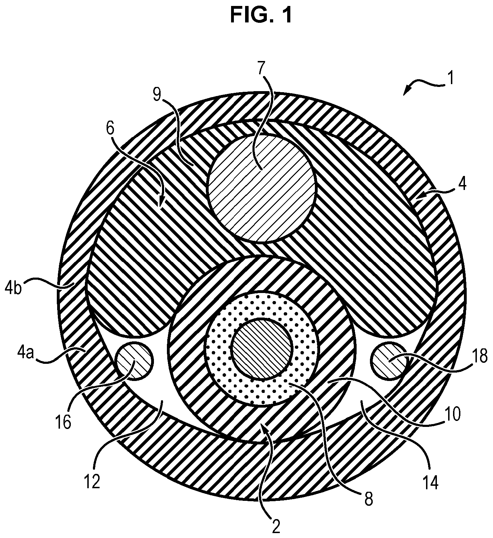

En référence à la **figure 1****,** un câble optique 1 s'étend le long d'un axe longitudinal (perpendiculaire à la figure).

Le câble optique 1 comprend un élément optique 2, une gaine 4 et un renfort 6.

Par élément optique, on entend un module optique incluant une ou plusieurs fibres optiques, des tubes contenant une ou plusieurs fibres optiques, des fibres optiques munies d'une enveloppe, des fibres optiques nues ou tous autres éléments permettant la transmission de signaux optiques.

L'élément optique 2 s'étend parallèlement à l'axe longitudinal. L'élément optique 2 présente typiquement une section transversale circulaire.

Dans le premier mode de réalisation représenté en figure 1, L'élément optique 2 comprend une fibre optique 8 semi-serrée ayant un diamètre égal à 900 micromètres, et une gaine 10 ayant un diamètre externe de 2,3 millimètres entourant la fibre optique 8. La gaine 10 de l'élément optique 2 peut être réalisée dans un matériau LSOH (matériau à faible taux de dégagement de fumées et quasi absence de dégagement de gaz halogénés) par exemple du Polyéthylène ou du Polypropylène chargé. L'élément optique 2 peut également comprendre des mèches d'aramides (non illustrées).

Le renfort 6 s'étend également le long de l'axe longitudinal du câble optique. Le renfort 6 définit une gorge ouverte longitudinalement le long de cet axe. L'élément optique 2 est au moins partiellement reçu dans la gorge. Par exemple, le renfort 6 présente une section transversale à l'axe longitudinal du câble optique du câble optique 1 en forme de C, comme cela est montré en figure 1.

Une fonction du renfort 6 est de rigidifier le câble optique 1. Il permet de limiter les dilatations et les rétreints de la gaine 4 sous l'effet de variations de température, grâce à sa résistance mécanique.

Une autre fonction du renfort 6 est de protéger l'élément optique 2 contre des chocs.

Le renfort 6 comprend une surface externe cylindrique de génératrices parallèles à l'axe longitudinal du câble optique 1.

Le renfort 6 comprend une matière plastique, par exemple du polyéthylène basse densité (PEBD) et/ou du plastique renforcé de fibres (FRP). Sa structure est composite. Les fibres peuvent être de nature synthétiques ou naturelles. Ces fibres peuvent être liées entre elles par une résine thermodurcissable ou thermoplastique.

Dans le mode de réalisation représenté en figure 1, le renfort 6 est constitué d'un élément rigide 7 réalisée par exemple en FRP s'étendant parallèlement à l'axe longitudinal du câble optique du câble optique 1, et une base 9 entourant l'élément rigide 7, cette base étant réalisée par exemple en PEBD. La base 9 définit un passage longitudinal de section circulaire dans lequel est reçue l'élément rigide 7.

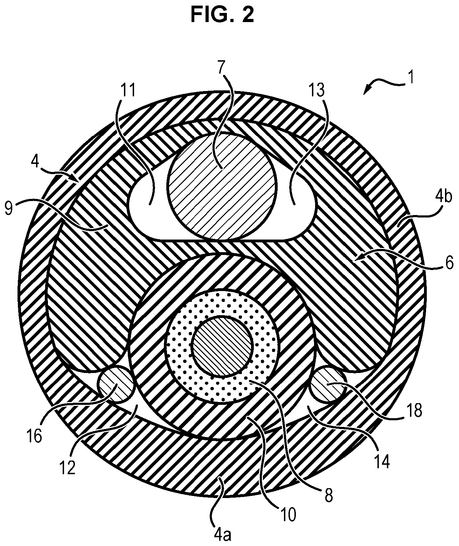

Dans un autre mode de réalisation représenté en **figure 2****,** le renfort 6 comprend également des éléments souples 11, 13 (c'est-à-dire comparativement plus souples que l'élément rigide 7), par exemple deux mèches d'aramides s'étendant également dans ce passage. Le passage n'est dans ce cas pas de section circulaire, mais de section sensiblement trapézoïdale à bord arrondi.

Par ailleurs, la gaine 4 est annulaire et s'étend autour de l'axe longitudinal du câble optique 1.

La gaine 4 s'étend autour de l'élément optique 2 et autour du renfort 6.

La gaine 4 est d'une seule pièce. Elle est par exemple réalisée en polyéthylène haute densité (PEHD).

La gaine 4 comprend une première partie 4a et une deuxième partie 4b. Les deux parties 4a et 4b s'étendent chacune sur différents secteurs angulaires autour de l'axe longitudinal du câble optique 1. Sur la figure 1, les deux parties 4a et 4b sont séparées par deux lignes en pointillées traversant la gaine 4.

La première partie 4a est agencée en regard de l'élément optique 2. On entend par l'expression « en regard » le fait qu'aucun élément n'est interposé entre la première partie 4a de la gaine 4 et l'élément optique 2, ce qui signifie que si la première partie 4a de la gaine 4 était retirée, l'élément optique 2 serait visible et accessible depuis l'extérieur du câble optique 1.

La première partie 4a n'est pas fixée à l'élément optique 2 ni au renfort 6.

La deuxième partie 4b de la gaine 4 est opposée à la première partie 4a par rapport à l'élément optique 2 et en regard au renfort 6. Autrement dit, le renfort 6 et l'élément optique 2 au moins partiellement reçu dans la gorge sont agencés entre la première partie 4a et la deuxième partie 4b.

Le renfort 6 est fixe par rapport à la deuxième partie 4b de la gaine 4.

Le renfort 6 est par exemple collé sur la deuxième partie 4b de la gaine 4. Par exemple, le renfort 6 est réalisé dans un matériau plastique comprenant un additif de type colle. Le collage du renfort 6 à la deuxième partie 4b de la gaine 4 est réalisée lors de l'extrusion de la gaine 4.

Est ménagée dans le câble optique 1 une cavité longitudinale entre le renfort 6 et la première partie de la gaine 4. Cette cavité longitudinale comprend notamment la gorge définie par le renfort 6.

La cavité longitudinale est par exemple dimensionnée pour que l'élément optique 2 reçu dans la gorge touche la deuxième partie de la gaine 4.

Deux logements 12, 14 sont par ailleurs définis par la gaine 4 et le renfort 6.

Ces deux logements 12, 14 sont deux espaces restants de la cavité longitudinale, une fois que l'élément optique 2 est au moins partiellement reçu dans la gorge du renfort 6.

En d'autres termes, la gorge et les deux logements 12, 14 forment différentes parties d'une seule et même cavité. Cette cavité est définie par la première partie 4a de la gaine.

Ces deux logements 12, 14 sont agencés entre le renfort 6 et la première partie 4a de la gaine 4.

Par ailleurs, l'élément optique 2 est agencé entre les deux logements 12 et 14.

Les deux logements 12 et 14 s'étendent parallèlement à l'axe longitudinal du câble optique 1.

Les deux logements 12 et 14 sont distincts l'un de l'autre.

Par ailleurs, les deux logements 12, 14 sont agencés pour que la première partie 4a de la gaine 4 (non fixée au renfort) s'étende sur un secteur angulaire de moins de 180 degrés autour de l'axe longitudinal du câble optique du câble.

Le câble optique 1 comprend par ailleurs deux éléments de déchirement 16, 18 logés dans les deux logements (un élément de déchirement par logement). La gaine 4 est agencée autour des éléments de déchirement 16, 18.

De façon générale, les deux éléments de déchirement 16, 18 sont agencés pour déchirer la gaine 4 lorsque ces éléments de déchirement 16, 18 sont tirés vers l'extérieur de la gaine 4, de sorte à former dans la première partie 4a de la gaine 4 une languette délimitée par les deux déchirures, cette languette étant susceptible d'être écartée de la deuxième partie de la gaine 4 pour libérer un accès à l'élément optique 2 depuis l'extérieur du câble optique 1.

Les deux logements 12 et 14 sont séparés l'un de l'autre par l'élément optique 2. Cela permet ainsi d'améliorer le confinement de deux éléments de déchirement 16 et 18, et donc de mieux guider un déchirement de la gaine 4 par l'un ou l'autre de ces deux éléments de déchirement.

Les éléments de déchirement 16, 18 ne sont pas collés à la gaine 4, ce qui rend leur saisie plus facile par un utilisateur.

Par ailleurs, les logements 12, 14 sont dimensionnés pour bloquer les éléments de déchirement 16, 18 en translation parallèlement à l'axe longitudinal du câble optique 1, par rapport à la gaine 4. La gaine 4, le renfort 6 et l'élément optique 2 pressent suffisamment sur chaque élément de déchirement pour l'empêcher de se déplacer le long de l'axe longitudinal par rapport à la gaine 4.

Les deux logements 12, 14 permettent de guider le déchirement de la gaine 4 par les deux éléments de déchirement 16, 18. Lorsque les deux logements 12, 14 s'étendant parallèlement à l'axe longitudinal du câble optique, les deux éléments de déchirements 16, 18 s'étendent de manière globalement rectiligne lorsqu'ils sont reçus dans les logements 12 et 14, et maintenus sous pression.

Au moins un des éléments de déchirement 16, 18 est réalisé dans un matériau souple tel que de l'aramide. L'aramide a pour avantage de participer à la bonne tenue en traction du câble, outre de permettre un déchirement de la gaine 4.

Au moins un des éléments de déchirement 16, 18 se présente par exemple sous la forme d'une mèche (c'est-à-dire un ensemble de fibres sensiblement parallèles, par exemple en aramide). Cette forme en mèche présente l'avantage de permettre à un élément de déchirement 16, 18 d'épouser naturellement les bords de son logement 12, 14, par réorganisation naturelle des fibres qui le composent. Cela permet d'améliorer l'effet de blocage longitudinal des éléments de déchirement assuré par les logements 12, 14.

En variante, au moins un élément de déchirement présente la forme d'un filin de déchirement constitué de fibres torsadées.

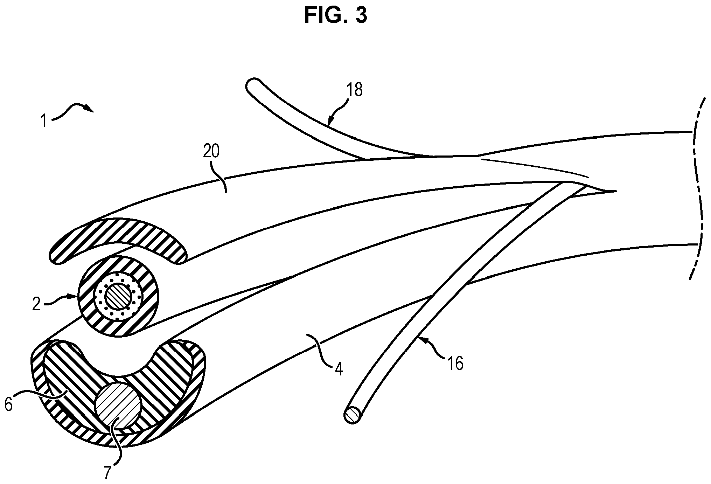

Il va maintenant être décrit un procédé d'ouverture du câble optique 1 en référence à la **figure 3****.**

Dans une première étape, un utilisateur réalise des amorces de déchirure dans une portion d'extrémité de la gaine 4, par exemple au moyen d'un outil tranchant tel qu'un cutter ou une paire de ciseaux, de sorte à libérer des portions d'extrémité des deux éléments de déchirement 16, 18 logés dans les logements 12, 14.

Dans une deuxième étape, l'utilisateur déchire la gaine 4 en tirant sur les deux éléments de déchirement 16, 18. Pour cela, l'utilisateur saisit la gaine 4 dans une de ses mains, et les portions d'extrémités du premier et deuxième élément de déchirement 16 et 18 dans son autre main. Comme les éléments de déchirement 16, et 18 ne sont pas collés au renfort 6, à la gaine 4 ou à l'élément optique 2, leur saisie par l'utilisateur est facilitée. L'utilisateur tire ensuite les portions d'extrémités du premier et deuxième élément de déchirement 16 et 18 vers l'extérieur du câble optique 1, ce qui a pour effet de tendre les éléments de déchirement 16 et 18 dans les logements 12 et 14. Comme les logements 12 et 14 dans lequel les éléments de déchirement 16 et 18 sont reçus sont rectilignes, ces logements 12 et 14 guident naturellement les éléments de déchirement 16 et 18 dans une position parfaitement rectiligne.

Lorsque la traction exercée par l'utilisateur dépasse un certain seuil, les éléments de déchirement 16 et 18 rompent la gaine 4 et y forment deux déchirures. Ces deux déchirures se trouvent sensiblement au niveau des deux lignes pointillées représentées sur les figures 1 et 2, mais peuvent également se situer ailleurs dans la première partie 4a de la gaine 4. Quoi qu'il en soit, une languette 20 est formée par ces déchirures dans la première partie 4a de la gaine 4, cette languette 20 étant délimitée par et agencée entre ces deux déchirures comme cela est représenté sur la figure 3.

Les deux déchirures délimitant cette languette 20 sont sensiblement rectilignes et parallèles à l'axe longitudinal du câble optique 1 en raison du fait que les éléments de déchirement 16 et 18 tendus ont été guidés par les logements 12 et 14 dans une position rectiligne et parallèle à ce même axe longitudinal. La languette 20 présente donc une forme sensiblement rectangulaire.

Le fait que la languette 20 s'étende sur un secteur angulaire inférieur à 180 degrés autour de l'axe longitudinal du câble optique 1 permet avantageusement à la languette 20 d'être écartée naturellement de la deuxième partie 4b de la gaine 4 au cours de l'étape de traction, ce qui libère un accès à l'élément optique sans qu'une étape ultérieure d'écartement manuel de la languette 20 par l'utilisation ne soit absolument nécessaire.

Par ailleurs, le fait que les éléments de déchirements 16 et 18 soient bloqués longitudinalement par un dimensionnement adéquat des logements 12 et 14 permet d'assurer un déchirement de la gaine 4 même lorsque cette gaine 4 est relativement épaisse (qui nécessite d'exercer une traction importante sur les éléments de déchirement 16, 18).

Si les éléments de déchirement n'étaient pas bloqués longitudinalement, le procédé d'ouverture du câble optique au moyen des éléments de déchirement serait plus malaisé. En effet, un élément de déchirement non bloqué aurait tendance à glisser longitudinalement dans le logement qui l'héberge sur une certaine longueur avant de solliciter la gaine, et donc d'amorcer une déchirure dans cette gaine. Cet élément de déchirement tiré par l'utilisateur pourrait même sortir complètement du logement qui le renferme sans qu'une déchirure de la gaine ne soit amorcée, lorsque cette gaine est épaisse en particulier.

Par conséquent, grâce au blocage longitudinal des éléments de déchirement, on peut ouvrir le câble optique 1 facilement sans avoir à diminuer l'épaisseur de la gaine, et donc sans porter atteinte à la fonction de protection de l'élément optique 2 contre des agressions extérieures assurée par la gaine 4.

Facultativement, dans une troisième étape, l'utilisateur peut écarter manuellement la languette 20 par rapport à la deuxième partie 4b de la gaine 4, comme s'il pelait la peau d'une banane, de façon à libérer un accès plus grand à l'élément optique 2.

Quelle que soit la manière dont l'écartement de la languette 20 est réalisé (automatiquement au cours de l'étape de traction, ou bien manuellement au cours d'une étape suivante), l'utilisateur n'a pas besoin de retirer un autre élément qui serait interposé entre la languette 20 et l'élément optique 2, puisque la première partie 4a de la gaine 4 dans laquelle la languette 20 est formée se trouve en regard de l'élément optique 2. L'accès à l'élément optique 2 est donc particulièrement rapide.

Le fait que le renfort 6 soit fixe par rapport à la deuxième partie 4b de la gaine 4 rend l'écartement de la languette 20 particulièrement facile à mettre en oeuvre, en raison du caractère rigide de ce renfort 6.

Par ailleurs, le fait que les logement 12, 14 soient parallèles à l'axe longitudinal du câble optique 1 permet de déchirer la gaine 4 sur une très grande longueur. En conséquence, l'élément optique 2 est lui-même dévoilé sur une grande longueur, ce qui a pour avantage de faciliter son raccordement ultérieur.

Ce raccordement peut être réalisé par une pose en goulotte, un agrafage ou un collage jusqu'à une prise optique d'un abonné dans le cas des deux modes de réalisation précédents.

Le câble selon l'invention n'est pas exclusivement destiné à faire l'objet d'un tel raccordement. L'invention est relative à toute application nécessitant d'obtenir un accès à l'élément optique 2 entouré par la gaine 4.

## Revendications

1. Câble optique (1) comprenant :
• un renfort (6) définissant une gorge longitudinale s'étendant parallèlement à un axe longitudinal du câble optique (1),
• un élément optique (2) au moins partiellement reçu dans la gorge,
• une gaine (4) entourant l'élément optique (2) et le renfort (6), la gaine (4) comprenant une première partie (4a) en regard de l'élément optique (2), et une deuxième partie (4b) opposée à la première partie (4a) par rapport à l'élément optique (2) et au renfort (6),
• deux éléments de déchirement (16, 18) adaptés pour déchirer la gaine (4) lorsque les éléments de déchirement (16, 18) sont tirés vers l'extérieur du câble optique (1),
• deux logements (12, 14) définis par la gaine (4) et le renfort (6) dans lesquels les éléments de déchirement (16, 18) sont logés, les logements (12, 14) étant agencés pour que le déchirement de la gaine (4) par les deux éléments de déchirement (16, 18) forme dans la première partie (4a) de la gaine (4) une languette (20) susceptible d'être écartée de la deuxième partie (4b) de la gaine (4), de sorte à libérer un accès à l'élément optique depuis l'extérieur du câble optique (1), **caractérisé par le fait que** la gorge et les deux logements forment différentes parties d'une seule et même cavité.

2. Câble optique (1) selon la revendication 1, dans lequel les deux logements (12, 14) s'étendent parallèlement à un axe longitudinal du câble optique (1) pour que la languette (20) soit délimitée par deux déchirures parallèles à l'axe longitudinal du câble optique (1).

3. Câble optique (1) selon l'une des revendications 1 et 2, dans lequel les deux logements (12, 14) sont agencés pour que la languette (20) s'étende sur un secteur angulaire de moins de 180 degrés autour de l'axe longitudinal du câble optique (1).

4. Câble optique (1) selon l'une des revendications 1 à 3, dans lequel le renfort est fixe par rapport à la deuxième partie (4b) de la gaine (4).

5. Câble optique (1) selon l'une des revendications 1 à 4, dans lequel le renfort (6) présente une section transversale en forme de C.

6. Câble optique (1) selon l'une des revendications 1 à 5, dans lequel le renfort (6) comprend au moins une matière plastique, par exemple du polyéthylène basse densité et/ou du plastique renforcé de fibres.

7. Câble optique (1) selon l'une des revendications 1 à 6, dans lequel les logements (12, 14) sont dimensionnés pour bloquer les éléments de déchirement (16, 18) en translation parallèlement à l'axe longitudinal du câble optique (1), les éléments de déchirement n'étant pas collés à la gaine (4) et/ou au renfort (6).

8. Câble optique (1) selon l'une des revendications 1 à 7, dans lequel au moins un des éléments de déchirement (16, 18) a la forme d'une mèche constituée de fibres sensiblement parallèles.

9. Câble optique (1) selon l'une des revendications 1 à 8, dans lequel les deux logements (12, 14) sont séparés l'un de l'autre par l'élément optique (2).

10. Procédé d'ouverture d'un câble optique (1) comprenant un renfort (6) définissant une gorge longitudinale s'étendant parallèlement à un axe longitudinal du câble optique (1), un élément optique (2) au moins partiellement reçu dans la gorge, une gaine (4) entourant l'élément optique (2) et le renfort (6), la gaine (4) comprenant une première partie (4a) en regard de l'élément optique (2) et une deuxième partie (4b) opposée à la première partie (4a) par rapport à l'élément optique (2) et au renfort (6), le câble optique (1) comprenant par ailleurs deux éléments de déchirement (16, 18) et deux logements (12, 14) définis par la gaine (4) et le renfort (6) dans lesquels les éléments de déchirement (16, 18) sont logés, le procédé comprenant une traction des éléments de déchirement (16, 18) vers l'extérieur du câble optique (1) de sorte à déchirer la gaine (4) et former dans la première partie de la gaine une languette (20) susceptible d'être écartée de la deuxième partie (4b) de la gaine et du renfort (6), de sorte à libérer un accès à l'élément optique (2) depuis l'extérieur du câble optique (1),
**caractérisé par le fait que**
la gorge et les deux logements forment différentes parties d'une seule et même cavité.

11. Procédé selon la revendication 10, dans lequel les deux éléments de déchirement (16, 18) sont tirés simultanément.

## Patentansprüche

1. Optisches Kabel (1), umfassend:
• eine Verstärkung (6), die eine Längsnut definiert, die sich parallel zu einer Längsachse des optischen Kabels (1) erstreckt,
• ein optisches Element (2), das mindestens teilweise in der Nut aufgenommen ist,
• einen Mantel (4), der das optische Element (2) und die Verstärkung (6) umgibt, wobei der Mantel (4) einen ersten Teil (4a), der dem optischen Element (2) zugewandt ist, und einen zweiten Teil (4b) gegenüber dem ersten Teil (4a) im Verhältnis zum optischen Element (2) und zur Verstärkung (6) umfasst,
• zwei Reißelemente (16, 18), die zum Zerreißen des Mantels (4) geeignet sind, wenn die Reißelemente (16, 18) nach außerhalb des optischen Kabels (1) gezogen werden,
• zwei Aufnahmen (12, 14), die von dem Mantel (4) und der Verstärkung (6) definiert sind, in denen die Reißelemente (16, 18) untergebracht sind, wobei die Aufnahmen (12, 14) eingerichtet sind, damit das Zerreißen des Mantels (4) durch die zwei Reißelemente (16, 18) im ersten Teil (4a) des Mantels (4) eine Lasche (20) bildet, die vom zweiten Teil (4b) des Mantels (4) derart beabstandbar ist, dass ein Zugang zum optischen Element von außerhalb des optischen Kabels (1) freigegeben wird, **dadurch gekennzeichnet, dass** die Nut und die zwei Aufnahmen verschiedene Teile ein und desselben Hohlraums bilden.

2. Optisches Kabel (1) nach Anspruch 1, wobei sich die zwei Aufnahmen (12, 14) parallel zu einer Längsachse des optischen Kabels (1) erstrecken, damit die Lasche (20) von zwei zur Längsachse des optischen Kabels (1) parallelen Rissen begrenzt ist.

3. Optisches Kabel (1) nach einem der Ansprüche 1 und 2, wobei die zwei Aufnahmen (12, 14) eingerichtet sind, damit sich die Lasche (20) über einen Winkelsektor von weniger als 180 Grad um die Längsachse des optischen Kabels (1) erstreckt.

4. Optisches Kabel (1) nach einem der Ansprüche 1 bis 3, wobei die Verstärkung im Verhältnis zum zweiten Teil (4b) des Mantels (4) befestigt ist.

5. Optisches Kabel (1) nach einem der Ansprüche 1 bis 4, wobei die Verstärkung (6) einen C-förmigen Querschnitt aufweist.

6. Optisches Kabel (1) nach einem der Ansprüche 1 bis 5, wobei die Verstärkung (6) mindestens ein Kunststoffmaterial, beispielsweise Polyethylen niederer Dichte und/oder faserverstärkten Kunststoff, umfasst.

7. Optisches Kabel (1) nach einem der Ansprüche 1 bis 6, wobei die Aufnahmen (12, 14) bemessen sind, um die Reißelemente (16, 18) in Translation parallel zur Längsachse des optischen Kabels (1) zu begrenzen, wobei die Reißelemente nicht mit dem Mantel (4) und/oder der Verstärkung (6) verklebt sind.

8. Optisches Kabel (1) nach einem der Ansprüche 1 bis 7, wobei mindestens eins der Reißelemente (16, 18) die Form einer Schnur hat, die von etwa parallelen Fasern gebildet ist.

9. Optisches Kabel (1) nach einem der Ansprüche 1 bis 8, wobei die zwei Aufnahmen (12, 14) durch das optische Element (2) voneinander getrennt sind.

10. Verfahren zum Öffnen eines optischen Kabels (1), das eine Verstärkung (6), die eine Längsnut definiert, die sich parallel zu einer Längsachse des optischen Kabels (1) erstreckt, ein optisches Element (2), das mindestens teilweise in der Nut aufgenommen ist, einen Mantel (4), der das optische Element (2) umgibt und die Verstärkung (6) umfasst, wobei der Mantel (4) einen ersten Teil (4a), der dem optischen Element (2) zugewandt ist, und einen zweiten Teil (4b) gegenüber dem ersten Teil (4a) im Verhältnis zum optischen Element (2) und zur Verstärkung (6) umfasst, wobei das optische Kabel (1) ferner zwei Reißelemente (16, 18) und zwei Aufnahmen (12, 14) umfasst, die vom Mantel (4) und der Verstärkung (6) definiert sind, in denen die Reißelemente (16, 18) untergebracht sind, wobei das Verfahren ein Ziehen der Reißelemente (16, 18) nach außerhalb des optischen Kabels (1) derart umfasst, dass der Mantel (4) zerrissen wird und im ersten Teil des Mantels eine Lasche (20) gebildet wird, die vom zweiten Teil (4b) des Mantels und der Verstärkung (6) derart beabstandbar ist, dass ein Zugang zum optischen Element (2) von außerhalb des optischen Kabels (1) freigegeben wird.

11. Verfahren nach Anspruch 10, wobei die zwei Reißelemente (16, 18) gleichzeitig gezogen werden.

## Claims

1. An optical cable (1) comprising:
- a reinforcement (6) defining a longitudinal groove extending parallel to a longitudinal axis of the optical cable (1),
- an optical element (2) at least partially housed in the groove
- a jacket (4) surrounding the optical element (2) and the reinforcement (6), the jacket (4) comprising a first part (4a) facing the optical element (2) and a second part (4b) opposite the first part (4a) with respect to the optical element (2) and to the reinforcement (6)
- two tearing elements (16, 18) suitable for tearing the sheath (4) when the tearing elements (16, 18) are pulled towards the outside of the optical cable (1)
- two spaces (12, 14) defined by the sheath (4) and the reinforcement (6) in which the tearing elements (16, 18) are housed, the spaces (12, 14) being arranged so that the tearing of the sheath (4) by the two tearing elements (16, 18) forms a flap (20) in the first part (4a) of the sheath (4) which can be spaced apart from the second part (4b) of the jacket (4) in such a way as to allow access to the optical element from outside the optical cable (1), **characterized in that** the groove and the two spaces form different parts of a single cavity.

2. The optical cable (1) of claim 1, wherein the two spaces (12, 14) extend parallel to a longitudinal axis of the optical cable (1) so that the tab (20) is bounded by two cracks parallel to the longitudinal axis of the optical cable (1).

3. The optical cable (1) of any one of claims 1 and 2, wherein the two spaces (12, 14) are arranged for the tab (20) to extend over an angular sector of less than 180 degrees about the longitudinal axis of the optical cable (1).

4. The optical cable (1) according to any one of claims 1 to 3, wherein the reinforcement is fixed in relation to the second part (4b) of the jacket (4).

5. The optical cable (1) according to any one of claims 1 to 4, wherein the reinforcement (6) has a C-shaped cross-section.

6. The optical cable (1) according to any one of claims 1 to 5, wherein the reinforcement (6) comprises at least one plastic material, for example low density polyethylene and/or fiber reinforced plastic.

7. The optical cable (1) according to any one of claims 1 to 6, wherein the spaces (12, 14) are dimensioned to delimit the tearing elements (16, 18) in translation parallel to the longitudinal axis of the optical cable (1), the tearing elements not being bonded to the sheath (4) and/or the reinforcement (6).

8. The optical cable (1) of any one of claims 1 to 7, wherein at least one of the tearing elements (16, 18) is in the form of a cord formed by approximately parallel fibers.

9. The optical cable (1) according to any one of claims 1 to 8, wherein the two spaces (12, 14) are separated from each other by the optical element (2).

10. A method of opening an optical cable (1) comprising a reinforcement (6) defining a longitudinal groove extending parallel to a longitudinal axis of the optical cable (1), an optical element (2) at least partially housed in the groove, a jacket (4) surrounding the optical element (2) and comprising the reinforcement (6), the jacket (4) comprising a first part (4a) facing the optical element (2) and a second part (4b) opposite the first part (4a) with respect to the optical element (2) and to the reinforcement (6) the optical cable (1) further comprising two tearing elements (16, 18) and two spaces (12, 14) defined by the jacket (4) and the reinforcement (6) in which the tearing elements (16, 18) are housed, the method comprising pulling the tearing elements (16, 18) towards the outside of the optical cable (1) in such a manner that the jacket (4) is torn and a flap (20) is formed in the first part of the jacket, which flap is able to be moved away from the second part (4b) of the jacket and the reinforcement (6) such that access to the optical element (2) from outside the optical cable (1) is released.

11. The method according to claim 10, wherein the two tearing elements (16, 18) are pulled simultaneously.
